# EUROPÄISCHE PATENTSCHRIFT

(11) **EP 1 881 922 B1**
(45) Veröffentlichungstag und Bekanntmachung des Hinweises auf die Patenterteilung: **03.09.2008**
(21) Anmeldenummer: 06776030.6
(22) Anmeldetag: 06.05.2006
(51) Int. Cl.: B60T 10/02, F16D 3/04

(54) **PUMPENANTRIEB FÜR DIE PUMPE EINES RETARDERS**
PUMP DRIVE FOR THE PUMP OF A RETARDER
ENTRAINEMENT DE POMPE POUR LA POMPE D'UN RALENTISSEUR

(30) Priorität: 14.05.2005 DE 102005022454
(43) Veröffentlichungstag der Anmeldung: 30.01.2008
(73) Patentinhaber: ZF FRIEDRICHSHAFEN AG, 88038 Friedrichshafen (DE)
(72) Erfinder: BURI, Gerhard, 88677 Markdorf (DE); GRUPP, Bernhard, 88250 Weingarten (DE); SAUTER, Frank, 88074 Meckenbeuren (DE)
(86) Internationale Anmeldenummer: PCT/EP2006/004263
(87) Internationale Veröffentlichungsnummer: WO 2006/122664

(56) Entgegenhaltungen:
- DE-A1- 4 108 658
- DE-A1- 10 140 220
- DE-A1- 19 833 892
- JP-A- 2004 291 740

## Beschreibung

Die vorliegende Erfindung betrifft einen Pumpenantrieb für die Pumpe eines Retarders gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Aus der DE 198 33 892 A1 der Anmelderin ist ein hydrodynamischer Retarder für ein Kraftfahrzeug bekannt, bei dem der Ölkreislauf einen Speicher, eine Pumpe, ein Umschaltventil und eine Steueranordnung aufweist und zum Druckabbau während des Retarderbetriebs ein Ventil zwischen dem Speicher und dem Retarder vorgesehen ist.

Aus der DE 101 40 220 A1 der Anmelderin ist ein hydrodynamischer Retarder für ein Kraftfahrzeug bekannt, bei dem die Hydraulikpumpe des Kreislaufs zur Steuerung des Retarders durch einen Elektromotor antreibbar ist.

Des weiteren ist im Rahmen der DE 41 08 658 A1 der Anmelderin ein einem Zahnräderwechselgetriebe nachgeschalteter hydrodynamischer Retarder bekannt, bei dem die Füllpumpe koaxial zum Rotor stirnseitig am Retardergehäuse angeflanscht ist und die Pumpenwelle über eine formschlüssige Kupplung mit der Rotorwelle verbunden ist. Hierbei ist die formschlüssige Kupplung durch eine Nut in der Stirnfläche der Rotorwelle und eine Klinge an der Pumpenwelle hergestellt.

Üblicherweise wird die koaxial zum Rotor angeordnete Retarderpumpe über eine Zweiflach-Kupplung angetrieben, wobei bei den aus dem Stand der Technik bekannten Lösungen kein vollständiger radialer Ausgleich gewährleistet ist; zudem sind Rotor und Pumpe in zwei unterschiedlichen Gehäusen angeordnet.

In nachteiliger Weise kann bei einer hohen Pumpleistung durch das Drehmoment der Pumpe, bei einem Versatz der Achsen von Rotorwelle und Pumpenwelle (aufgrund von fertigungsbedingt anfallenden Toleranzen) eine zusätzliche Querbelastung auf die Pumpenwelle und damit eine wesentlich höhere Radialkraft auf die Lager erzeugt werden, was in einer Beschädigung bzw. Zerstörung der Lager resultieren kann.

Der vorliegenden Erfindung liegt die Aufgabe zugrunde, einen Pumpenantrieb für einen Retarder anzugeben, bei dem die zusätzliche Lagerbelastung infolge erhöhter Querbelastung auf die Pumpenwelle vermieden wird, so dass die Lagerlebensdauer erhöht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Pumpenantrieb für die Pumpe eines Retarders vorgeschlagen, wobei die Pumpe vom Rotor des Retarders über eine die Rotorwelle und die Pumpenwelle miteinander verbindende Kupplung angetrieben wird, bei dem die Kupplung zwischen der Rotorwelle und der Pumpenwelle als quernachgiebige Kupplung zum Ausgleich von parallelen radialen Achsverschiebungen sowie von kleineren axialen Verschiebungen der Rotorwelle und Pumpenwelle zueinander ausgebildet ist.

Im Rahmen einer bevorzugten Ausführungsform der Erfindung wird vorgeschlagen, als quemachgiebige Kupplung eine Kreuzscheibe zu verwenden, die mit zwei Fingern in Nuten einer dazugehörigen antreibenden Mitnehmerscheibe, die mit der Rotorwelle drehfest verbunden ist, eingreift, wobei der vorzugsweise als Zweiflach ausgebildete Wellenstummel der Pumpenwelle (Pumpenmitnahme) in einen um 90° zu den Fingern verdrehten Schlitz der Kreuzscheibe eingreift.

Die in vorteilhafter Weise über einen Sicherungsring axial in der Mitnehmerscheibe gesicherte Kreuzscheibe kann sich entlang der Nuten in der Mitnehmerscheibe bewegen, während sich die Pumpenmitnahme bzw. der Wellenstummel im Schlitz der Kreuzscheibe quer dazu bewegen kann.

Durch die erfindungsgemäße Konzeption wird eine aus Querbelastungen resultierende Lagerbelastung vermieden, wodurch die Lagerlebensdauer erhöht wird.

Im Rahmen einer vorteilhaften Weiterbildung der Erfindung wird vorgeschlagen, den Wellenstummel der Pumpenwelle derart zu modifizieren, dass eine vierflächige Mitnahme entsteht, wobei immer zwei korrespondierende Flächen wie ein Zweiflach funktionieren. Bei einer Drehrichtungsumkehr, beispielsweise bei Rückwärtsfahrt, bleibt die Pumpenwelle nur so lange stehen, bis die entsprechenden Flächen zur Anlage kommen, so dass dann wieder ein radialer Ausgleich gewährleistet wird.

Dadurch entsteht der Vorteil, dass die Verdreh-, Einstell- bzw. Positionier-Toleranz an der Pumpenmitnahme erhöht wird, was auch in einer Vereinfachung einer "Blind-Montage" am Montageband resultiert.

Die Erfindung wird im Folgenden anhand der beigefügten Figuren beispielhaft näher erläutert.
Es zeigen:
- Fig. 1: eine schematische perspektivische Ansicht a), eine schematische Draufsicht b) und eine schematische Schnittansicht c) einer erfindungsgemäßen Kupplung für den Pumpenantrieb eines Retarders und
- Fig. 2: schematische Draufsichten a), b) und c) einer weiteren bevorzugten Ausführungsform der vorliegenden Erfindung, welche den radialen Ausgleich bei einer Drehrichtungsumkehr veranschaulichen.

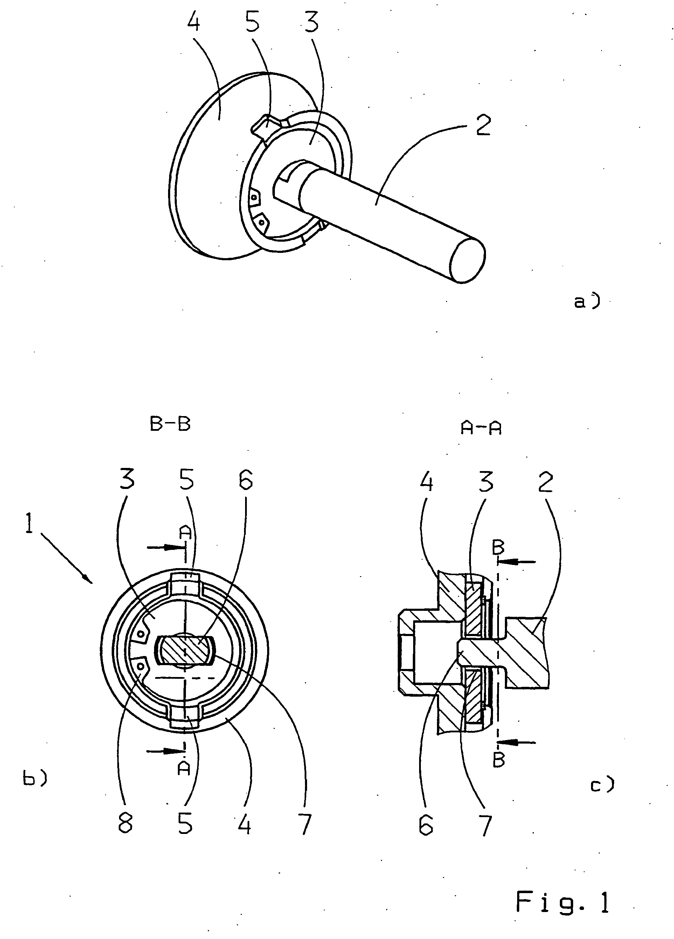

Wie in Fig. 1 gezeigt, ist die Kupplung 1 zwischen der Rotorwelle und der Pumpenwelle 2 als quernachgiebige Kupplung zum Ausgleich von parallelen radialen Achsverschiebungen sowie von kleineren axialen Verschiebungen der Rotorwelle und Pumpenwelle zueinander ausgebildet und umfasst eine Kreuzscheibe 3, die mit zwei Fingern 5 in Nuten der dazugehörigen antreibenden (mit der Rotorwelle verbundenen) Mitnehmerscheibe 4 eingreift.

Die in der Fig. 1 in der Mitnehmerscheibe 4 angeordneten Nuten können erfindungsgemäß direkt in dem Rotor als mit der Rotorwelle drehfest verbundenem Bauteil vorgesehen sein. Dann ist die Mitnehmerscheibe 4 mit dem Rotor als ein Bauteil ausgebildet.

Gemäß der Erfindung ist der als Pumpenmitnahme dienende Wellenstummel 6 der Pumpenwelle 2 als Zweiflach ausgebildet und greift in einen um etwa 90° zu den Fingern 5 verdrehten Schlitz 7 der Kreuzscheibe 3 ein. Wie aus der Ansicht b) der Fig. 1 ersichtlich, ist die Kreuzscheibe 3 über einen Sicherungsring 8 axial in der Mitnehmerscheibe 4 gesichert. Die Kreuzscheibe 3 kann sich entlang der Nuten in der Mitnehmerscheibe 4 bewegen, während sich der Wellenstummel 6 im Schlitz 7 der Kreuzscheibe 3 quer dazu bewegen kann.

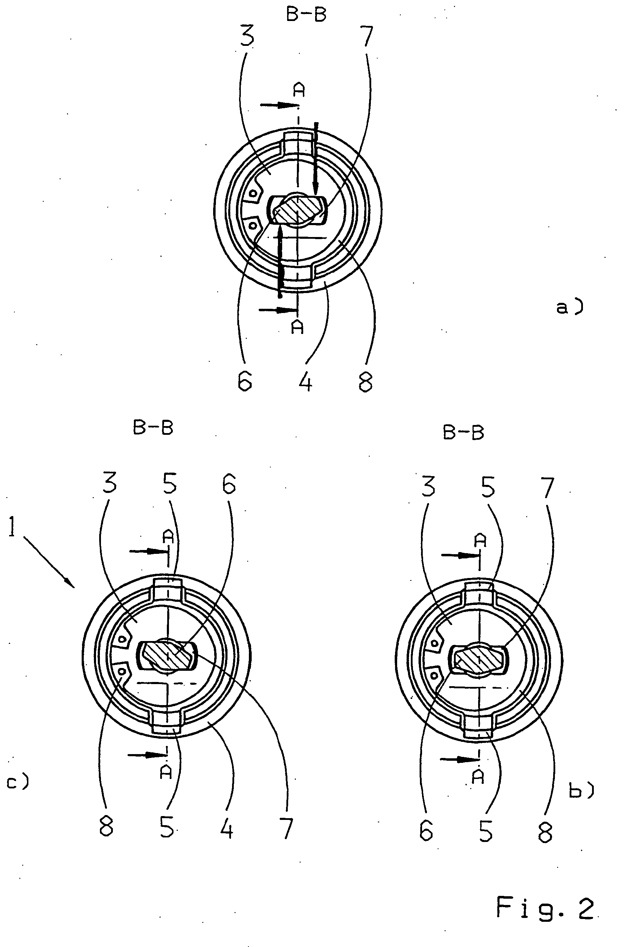

Bei dem in Fig. 2 gezeigten Ausführungsbeispiel ist der als Pumpenmitnahme dienende Wellenstummel 6 der Pumpenwelle 2 als vierflächige Mitnahme ausgebildet, wobei immer zwei korrespondierende Flächen wie ein Zweiflach funktionieren. Auf diese Weise bleibt bei einer Drehrichtungsumkehr, beispielsweise bei Schalten von Vorwärtsfahrt auf Rückwärtsfahrt, die Pumpenwelle 2 so lange stehen, bis die entsprechenden Flächen zur Anlage kommen, so dass dann wieder ein radialer Ausgleich gewährleistet ist. Die Ansichten a), b) und c) veranschaulichen die unterschiedlichen Positionen der derart ausgestalteten Pumpenmitnahme innerhalb des Schlitzes 7.

Selbstverständlich fällt auch jede konstruktive Ausbildung, insbesondere jede räumliche Anordnung der Elemente des erfindungsgemäßen Pumpenantriebs für die Pumpe eines Retarders an sich sowie zueinander und soweit technisch sinnvoll, unter den Schutzumfang der vorliegenden Ansprüche, ohne die Funktion des Pumpenantriebs, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Kupplung
- 2: Pumpenwelle
- 3: Kreuzscheibe
- 4: Mitnehmerscheibe
- 5: Finger
- 6: Wellenstummel
- 7: Schlitz
- 8: Sicherungsring

## Patentansprüche

1. Pumpenantrieb für die Pumpe eines Retarders, wobei die Pumpe vom Rotor des Retarders über eine die Rotorwelle und die Pumpenwelle miteinander verbindende Kupplung angetrieben wird, **dadurch gekennzeichnet, dass** die Kupplung zwischen der Rotorwelle und der Pumpenwelle (2) als quemachgiebige Kupplung zum Ausgleich von parallelen radialen Achsverschiebungen sowie von kleineren axialen Verschiebungen der Rotorwelle und Pumpenwelle (2) zueinander ausgebildet ist.

2. Pumpenantrieb für die Pumpe eines Retarders nach Anspruch 1, **dadurch gekennzeichnet, dass** die zwischen der Rotorwelle und der Pumpenwelle (2) angeordnete Kupplung eine Kreuzscheibe (3) umfasst, die mit zwei Fingern (5) in Nuten einer mit der Rotorwelle drehfest verbundenen antreibenden Mitnehmerscheibe (4) eingreift, wobei der als Pumpenmitnahme dienende Wellenstummel (6) der Pumpenwelle (2) als Zweiflach ausgebildet ist und in einen um etwa 90° zu den Fingern (5) verdrehten Schlitz (7) der Kreuzscheibe (3) eingreift, derart, dass sich die Kreuzscheibe (3) entlang der Nuten in der Mitnehmerscheibe (4) und der Wellenstummel (6) im Schlitz (7) der Kreuzscheibe (3) bewegen kann.

3. Pumpenantrieb für die Pumpe eines Retarders nach Anspruch 2, **dadurch gekennzeichnet, dass** die Kreuzscheibe (3) über einen Sicherungsring (8) axial in der Mitnehmerscheibe (4) gesichert ist.

4. Pumpenantrieb für die Pumpe eines Retarders nach Anspruch 2 oder 3, **dadurch gekennzeichnet, dass** der als Pumpenmitnahme dienende Wellenstummel (6) der Pumpenwelle (2) nicht als Zweiflach, sondern als vierflächige Mitnahme ausgebildet ist, wobei immer zwei korrespondierende Flächen wie ein Zweiflach funktionieren, derart, dass bei einer Drehrichtungsumkehr die Pumpenwelle (2) so lange stehen bleibt, bis die entsprechenden Flächen zur Anlage kommen, so dass ein radialer Ausgleich gewährleistet wird.

5. Pumpenantrieb für die Pumpe eines Retarder nach einem der Ansprüche 2 bis 4, **dadurch gekennzeichnet, dass** der Rotor des Retarders mit der Mitnehmerscheibe (4) als ein Bauteil ausgebildet ist.

## Claims

1. A pump drive for a retarder pump, with the pump being driven by the retarder rotor via a clutch connecting rotor shaft and pump shaft, **characterized in that** the clutch between rotor shaft and pump shaft (2) is designed as transversally elastic clutch for the equalization of parallel radial axle displacements as well as minor axial displacements of rotor shaft and pump shaft (2) relative to one another.

2. A pump drive for a retarder pump according to claim 1, **characterized in that** the clutch arranged between rotor shaft and pump shaft (2) features a cross coupling (3) with two fingers (5) which engage in grooves of a driving disk (4) nonrotationally connected to the rotor shaft, with the shaft stub (6) of the pump shaft (6) functioning as pump drive and being designed as a dihedron and engaging in a slot (7) of the cross coupling (3), with said slot being rotated through approx. 90° relative to the fingers (5), and with the engagement being such that the cross coupling (3) can move along the grooves in the driving disk (4), and the shaft stub (6) in the slot (7) of the cross coupling (3).

3. Pump drive for a retarder pump according to claim 2, **characterized in that** the cross coupling (3) is axially secured to the driving disk (4) by means of a locking ring (8).

4. Pump drive for a retarder pump according to claim 2 or 3, **characterized in that** the shaft stub (6) of the pump shaft (2) serving as pump drive is not designed as a dihedron but as a tetrahedral driver, with two corresponding surfaces always functioning as a dihedron in such a way that when the direction of rotation is reversed, the pump shaft (2) will remain stationary until the corresponding surfaces are in contact, so that radial equalization is guaranteed.

5. Pump drive for a retarder pump according to one of the claims 2 thru 4, **characterized in that** retarder rotor and driving disk (4) are designed as a single component

## Revendications

1. Entraînement de pompe pour la pompe d'un ralentisseur, sachant que la pompe est entraînée par le rotor du ralentisseur par l'intermédiaire d'un accouplement reliant l'arbre de rotor et l'arbre de pompe, **caractérisé en ce que** l'accouplement entre l'arbre de rotor et l'arbre de pompe (2) est conçu sous la forme d'un accouplement à flexibilité transversale permettant de compenser des désalignements radiaux parallèles ainsi que des petits déplacements axiaux de l'arbre de rotor et de l'arbre de pompe (2) l'un par rapport à l'autre.

2. Entraînement de pompe pour la pompe d'un ralentisseur selon la revendication 1, **caractérisé en ce que** l'accouplement disposé entre l'arbre de rotor et l'arbre de pompe (2) comprend un croisillon (3), celui-ci s'engageant avec deux doigts (5) dans les rainures d'un disque d'entraînement (4) lié solidaire en rotation à l'arbre de rotor, sachant que le bout d'arbre (6) de l'arbre de pompe (2) utilisé pour l'entraînement de la pompe est réalisé comme corps dièdre et **en ce que** celui-ci s'engage dans une rainure (7) du croisillon (3) tourné d'environ 90° par rapport aux doigts (5), de façon à ce que le croisillon (3) peut se déplacer le long des rainures dans le disque d'entraînement (4) et **en ce que** le bout d'arbre (6) peut se déplacer dans la rainure (7) du croisillon (3).

3. Entraînement de pompe pour la pompe d'un ralentisseur selon la revendication 2, **caractérisé en ce que** le croisillon (3) est fixé par l'intermédiaire d'un circlip (8) axialement dans le disque d'entraînement (4).

4. Entraînement de pompe pour la pompe d'un ralentisseur selon la revendication 2 ou 3, **caractérisé en ce que** le bout d'arbre (6) de l'arbre de pompe (2) utilisé comme entraînement de pompe n'est pas réalisé comme corps dièdre, mais comme entraînement en forme tétraèdre, sachant que deux surfaces correspondantes fonctionnent toujours comme un corps dièdre, de façon à ce que en cas d'une inversion du sens de marche l'arbre de pompe (2) ne tourne tant que les surfaces correspondantes se trouve en butée, garantissant ainsi une compensation radiale.

5. Entraînement de pompe pour la pompe d'un ralentisseur selon une des revendications 2 à 4, **caractérisé en ce que** le rotor du ralentisseur et le disque d'entraînement (4) sont réalisés en une pièce.
